# EUROPÄISCHE PATENTSCHRIFT

(11) **EP 0 581 111 B1**
(45) Veröffentlichungstag und Bekanntmachung des Hinweises auf die Patenterteilung: **27.09.1995**
(21) Anmeldenummer: 93111264.3
(22) Anmeldetag: 14.07.1993
(51) Int. Cl.: B60N 3/02

(54) **Anbauteil, wie Haltegriff, Sonnenblende od. dgl. für den Innenraum von Fahrzeugen**
Accessory, such as a handgrip or a sun visor, for the passenger compartment of vehicles
Accessoire, comme poignée de maintien ou pare-soleil, pour l'habitacle de véhicules

(30) Priorität: 22.07.1992 DE 4224148
(43) Veröffentlichungstag der Anmeldung: 02.02.1994
(73) Patentinhaber: Gebr. Happich GmbH, D-42097 Wuppertal (DE)
(72) Erfinder: Mahler, Gert, D-42477 Radevormwald (DE); Kauka, Christof, D-47623 Kevelaer (DE); Mieglitz, Hans Helmut, D-40789 Monheim (DE)

(56) Entgegenhaltungen:
- DE-A- 3 018 060
- DE-A- 3 021 552
- DE-A- 3 245 927
- GB-A- 708 894

## Beschreibung

Die Erfindung bezieht sich auf ein Anbauteil, wie Haltegriff, Sonnenblende od. dgl. für den Innenraum von Fahrzeugen, mit zumindest einem Aufnahmegehäuse zum Übergreifen eines an einer Anschlußwand zu befestigenden Lagerbocks, an dem das Anbauteil zum Überführen aus einer Nichtgebrauchslage in eine Gebrauchslage oder umgekehrt klappbar angelenkt ist, wozu ein Bohrungen im Aufnahmegehäuse und Lagerbock durchsetzender Gelenkstift vorgesehen ist.

In der DE-A-32 45 927 ist ein Anbauteil für den Innenraum von Fahrzeugen beschrieben, das in Form eines Haltegriffs ausgebildet ist. Der Haltegriff weist Aufnahmegehäuse auf, die an einer Anschlußwand befestigte Lagerböcke übergreifen. Die Aufnahmegehäuse sind an den Lagerböcken klappbar angelenkt, wozu Bohrungen in den Aufnahmegehäusen und Lagerböcken durchsetzende Gelenkstifte vorgesehen sind. Bei dem bekannten Haltegriff sind die Lagerböcke mit Bohrungen zum Durchführen von Befestigungsschrauben versehen, die in die Befestigungswand einzuschrauben sind. Das Anschrauben von Haltegriffen und anderen Anbauteilen im Innenraum von Fahrzeugen ist mit einem relativ hohen Montageaufwand verbunden, der als lohnintensiv und nicht mehr zeitgemäß empfunden wird. Schraubverbindungen haftet zudem der Nachteil an, daß sie sich mit der Zeit lösen können. Es sind zwar schon Einrast- und Klipsbefestigungen für Anbauteile im Innenraumbereich von Fahrzeugen bekanntgeworden (vgl. z.B. DE-A-30 21 552), die jedoch den Nachteil einer wesentlich erschwerten Demontage aufweisen.

Es ist daher vornehmlich Aufgabe der vorliegenden Erfindung hier Abhilfe zu schaffen und ein Anbauteil der eingangs genannten Art bereitzustellen, das sich bei vergleichsweise einfacher und kostengünstiger Herstellbarkeit schnell und einfach montieren läßt und das im montierten Zustand absolut zuverlässig gehaltert ist.

Diese Aufgabe wird erfindungsgemäß dadurch gelöst, daß der Lagerbock mit einer, eine Öffnung in der Anschlußwand durchsetzenden und den Öffnungsrand hintergreifenden Rastnase ausgebildet ist, daß der Lagerbock einen daran angelenkten Rasthebel mit einer parallel zum Gelenkstift ausgerichteten Drehachse trägt, daß der Rasthebel nach Art eines Stockankers ausgebildet und mit dem freien Stockende am Lagerbock angelenkt ist, während am anderen Stockende die gekrümmten Arme sitzen, in denen der erste vom Aufnahmegehäuse beaufschlagbar ist, um den zweiten durch eine Klappbewegung des Anbauteils in eine den Rand der Öffnung in der Anschlußwand, an der der Rastnase abgewandten Seite hintergreifende Rastlage zu schwenken und daß der erste Arm mit einem Rastnocken ausgebildet ist, der in der Rastlage des Arms von einem Anschlag des Lagerbocks abgestützt ist.

Der besondere Vorteil der erfindungsgemäßen Maßnahmen besteht darin, daß zur Montage des Anbauteils lediglich die Rastnase über den unteren Rand der Anschlußwandöffnung zu hängen und hiernach das Anbauteil zu klappen ist. Die Befestigung beschränkt sich also auf die Montagemaßnahmen einhängen und klappen. Beim Einhängen kann das Anbauteil in der späteren Gebrauchsstellung ausgerichtet sein und durch Klappen in die Nichtgebrauchslage überführt werden. Die Klappbewegung wird unmittelbar auf den Rasthebel übertragen, der um seine Drehachse schwenkt und mit seinem zweiten Arm, der im folgenden als Rastarm bezeichnet wird, den Rand der Öffnung in der Anschlußwand hintergreift. Die durch die erfindungsgemäßen Maßnahmen erreichte Befestigung und Verspannung ist auch auf Dauer zuverlässig, insbesondere deshalb, weil der Rastnocken am ersten Arm bei der Schwenkbewegung des Rasthebels die Totpunktlinie zwischen den Gelenkstiften überschreitet, bevor er vom Anschlag des Lagerbocks abgestützt wird.

Eine vorteilhafte Ausgestaltung der Erfindung sieht vor, daß das Anbauteil an einem Formkörper vormontiert und zusammen mit dem Formkörper an der Anschlußwand befestigbar ist. Als Formkörper kann ein beliebiges Verkleidung steil, insbesondere aber eine Aufnahmeschale zur versenkbaren Anordnung des Anbauteils in der Nichtgebrauchslage vorgesehen sein. Die Anordnung einer Aufnahmeschale bietet sich insbesondere dann an, wenn das Anbauteil als Haltegriff ausgebildet ist, der in der Aufnahmeschale eine ästhetisch ansprechende Aufnahme findet.

Eine weitere besonders vorteilhafte Ausgestaltung der Erfindung besteht darin, daß der Formkörper als Zier- und/oder Stützrahmen ausgebildet und am Randbereich des Fahrzeugdachs anordbar ist, wobei es sich zum Ausgleich von Bautoleranzen empfiehlt, daß der Zier- und/oder Stützrahmen aus mindestens zwei Teilelementen zusammengesetzt ist.

Die Erfindung ermöglicht somit nicht nur die schnelle und problemlose Befestigungsanordnung eines Anbauteils sondern zugleich auch die Anordnung eines Formkörpers, wie Aufnahmeschale, Zier- und/oder Stützrahmen an einer Anschlußwand, bei der es sich um den Dachrahmen einer Fahrzeugkarosserie handeln kann.

Die Erfindung kann dadurch weitergebildet werden, daß der Lagerbock einstückiger Bestandteil des Formkörpers ist. Wird also für den Formkörper, wie es bevorzugt vorgesehen ist, ein Kunststoff-Spritzgußteil eingesetzt, so läßt sich daran ohne jeglichen Aufwand ein Lagerbock oder deren mehrere materialeinheitlich anformen.

Andererseits kann in weiterer Ausgestaltung der Erfindung auch vorgesehen sein, daß der Lagerbock als separates, an das Anbauteil zu montierendes Losteil ausgebildet ist und einen der Rastnase abgewandt ausgerichteten Stützzapfen zum Eingreifen in eine Ausnehmung des Formkörpers aufweist. Der Stützzapfen soll lediglich zur Erleichterung der Montage, insbesondere zur Erleichterung der Vormontage des Anbauteils am Formkörper dienen und eine vorläufige verliersichere Verbindung zwischen Anbauteil und Formkörper ermöglichen. Die separate Ausbildung des Lagerbocks ist immer dann von Vorteil, wenn Fertigungstoleranzen zu überbrücken sind.

Die Erfindung läßt sich weiterhin auch dadurch ausgestalten, daß das Anbauteil in mehrfacher Anordnung an einem Formkörper, der als Zier- und Stützrahmen ausgebildet ist, vormontiert ist, wobei der Zier- und Stützrahmen mit einem Dachhimmel und weiteren Anbauelementen, wie Luftkanälen, Verkabelungen, Hecksonnenblenden, Haltegriffen, Leuchten, seitlichen Sonnenblenden, Lüfterdüsen, Garderobenhaken, Brillendepots, Frontsonnenblenden und dgl. ausgerüstet ist und wobei der Formkörper zumindest durch die Befestigungsausbildungen der Haltegriffe an den Anschlußwänden festlegbar ist.

Die Erfindung ermöglicht somit die Gestaltung eines modularen Dachhimmelsystems mit Anbauteilen, durch die eine schnelle und einfach durchzuführende Montage gewährleistet wird. Die Anbauteile, insbesondere Haltegriffe aber auch die Sonnenblenden od. dgl. sind dabei so an den Zier- und Stützrahmen vorzumontieren, daß sie alle in Montagebereitschaft stehen und gemeinsam durch eine Klappbewegung verriegelt werden können. Es ist leicht einzusehen, daß für eine solche gemeinsame Klappbewegung automatische Mittel, wie Roboter zum Einsatz gelangen können.

Ausführungsbeispiele der Erfindung werden im folgenden anhand der beigefügten Zeichnungen näher erläutert. Es zeigen:
- Fig. 1: ein Anbauteil in Form eines Haltegriffs,
- Fig. 2 bis 9: jeweils einen Schnitt folgend der Linie II - II in Fig. 1,
- Fig. 10: in ein Dachhimmelsystem integrierte Anbauteile unterschiedlicher Art und
- Fig. 11: einen Montageablauf des Systems nach Fig. 10.

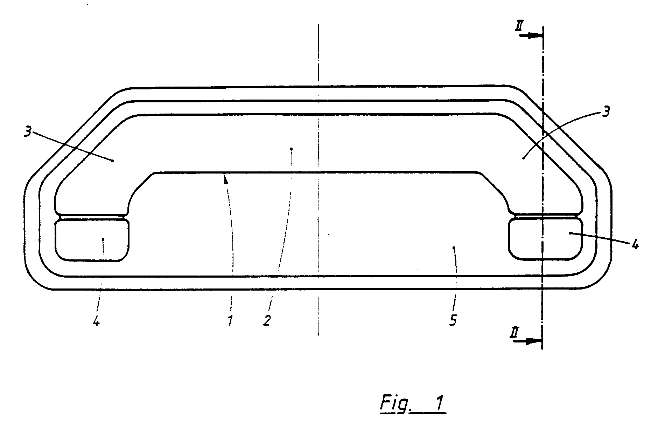

Das Anbauteil nach Fig. 1 ist als Haltegriff mit einem bügelförmigen Griffkörper 1, der einen Steg 2 und zwei Schenkel 3 umfaßt, ausgebildet. Die Enden der Schenkel 3 gehen jeweils in ein Aufnahmegehäuse 4 über. Angeordnet ist der Haltegriff in einem als Aufnahmeschale 5 ausgebildeten Formkörper, der innerhalb eines Fahrzeugs im Übergangsbereich zwischen dem Dach und einer Seitenwand zu befestigen ist.

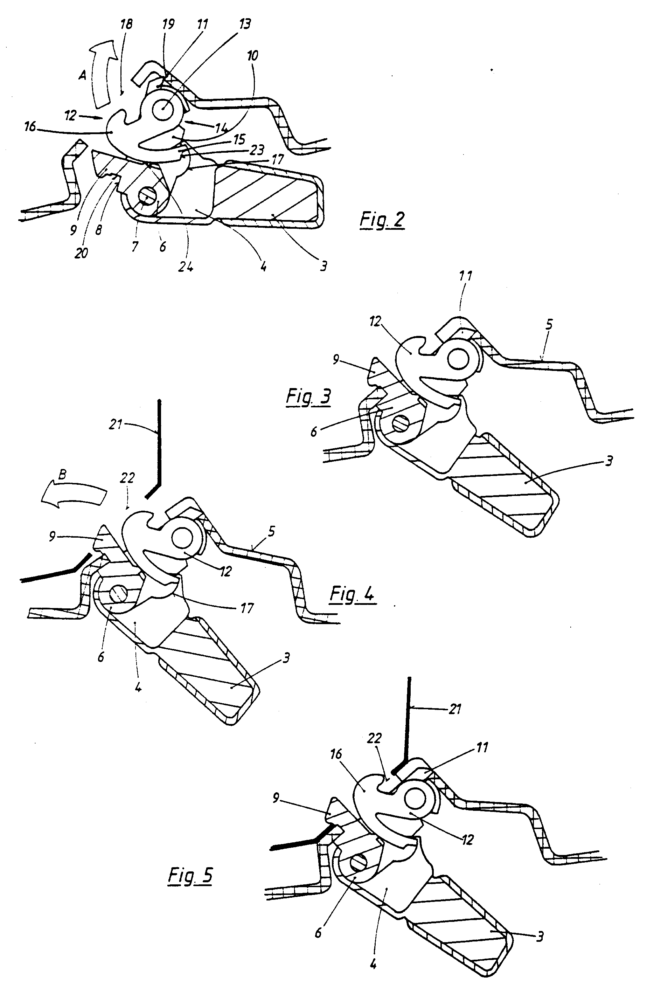

Fig. 2 zeigt einen Schnitt durch den Haltegriff nach Fig. 1 und läßt erkennen, daß die Öffnung des Aufnahmegehäuses 4 einen Lagerbock 6 übergreift und daß das Aufnahmegehäuse 4 am Lagerbock 6 unter Verwendung eines Gelenkstifts 7 angelenkt ist. Die Anlenkung des Haltegriffs am Lagerbock 6 ermöglicht es, den Griffkörper 1 aus einer eng an einer Befestigungswand anliegenden Nichtgebrauchslage in eine von der Befestigungswand abstehenden Gebrauchslage, wie auch umgekehrt, zu klappen. Dabei ist es möglich, zwischen dem Aufnahmegehäuse 4 und dem Lagerbock 6 nicht gezeigte Federmittel anzuordnen, die bestrebt sind, den Haltegriff in der Nichtgebrauchslage zu halten bzw. in die Nichtgebrauchslage zurückzuführen. Auch empfiehlt es sich, zwischen dem Aufnahmegehäuse 4 und dem Lagerbock 6 ebenfalls nicht dargestellte Sperrmittel vorzusehen, die in der Lage sind, den Griffkörper 1 bis zum Abschluß der Befestigungsmontage in der aufgeklappten Gebrauchslage zu halten.

Fig. 2 zeigt weiter, daß der Lagerbock 6 mit einer die Anlagefläche 8 überragenden Rastnase 9 um mit einem seitlich aus dem Aufnahmegehäuse 4 heraustretenden Lagerbockansatz 10, an den sich ein senkrecht zur Rastnase 9 ausgerichteter Stützzapfen 11 anschließt, ausgebildet ist. An dem Lagerbockansatz 10, der als zweizinkige Gabel ausgebildet sein kann, ist ein Rasthebel 12 angelenkt, und zwar mit einer parallel zum Gelenkstift 7 ausgerichteten Drehachse 13. Die Drehachse 13 kann aus einem Gelenkstift oder aus am Rasthebel 12 angeformten Achszapfen bestehen, die durch eine Schlitzöffnung 14 hindurch in eine hinterschnittene Lagerbohrung im Lagerbockansatz 10 einklipsbar sind.

Der Rasthebel 12 ist nach Art eines Stockankers ausgebildet und mit dem freien Stockende am Lagerbock 6 bzw. am Lagerbockansatz 10 angelenkt. Am anderen Stockende sitzen die gekrümmten Arme, von denen der erste mit Druckarm 15 und der zweite mit Rastarm 16 bezeichnet ist. Der Druckarm 15 liegt mit seinem freien Ende an einer gekrümmten Wandung 17, die im Aufnahmegehäuse 4 ausgebildet ist, an.

Beim Ausführungsbeispiel nach Fig. 1 bis 9 wird davon ausgegangen, daß das Anbauteil in Form eines Haltegriffs an ein als Aufnahmeschale 5 ausgebildetes Formteil vorzumontieren und zusammen mit dem Formteil an eine Anschlußwand, im allgemeinen eine Karosseriewand, zu befestigen ist.

In den Fig. 2 und 3 sind die Vormontageschritte gezeigt, wobei ersichtlich ist, daß die Aufnahmeschale 5 eine Öffnung 18 zum Durchlaß der Rastnase 9 und des Rasthebels 12 sowie eine Ausnehmung 19 für den Stützzapfen 11 aufweist. Fig. 2 zeigt, daß zunächst der Stützzapfen 11 in die Ausnehmung 19 (vgl. Pfeil A) bewegt wird, wonach gemäß Fig. 3 die Rastnase 9 über den dem Stützzapfen 11 abgewandten Rand der Öffnung 18 bewegt bzw. geklipst wird. Der Öffnungsrand sitzt hiernach in einer Aufnahmevertiefung 20 der Rastnase 9.

Fig. 2 zeigt somit den Beginn und Fig. 3 den Abschluß der Vormontage, bei der ein Anbauteil (Haltegriff) mit einem Formkörper (Aufnahmeschale) verliersicher zu einer einbaufertigen Einheit verbunden wird. Die Vormontageschritte ändern sich, wenn an der Aufnahmeschale 5 Lagerböcke 6 unmittelbar angeformt werden, was sich im Kunststoff-Spritzgußverfahren problemlos realisieren läßt. In diesem Fall beschränkt sich die Vormontage auf das Einstecken der Gelenkstifte 7 und auf das Einklipsen des Rasthebels 12.

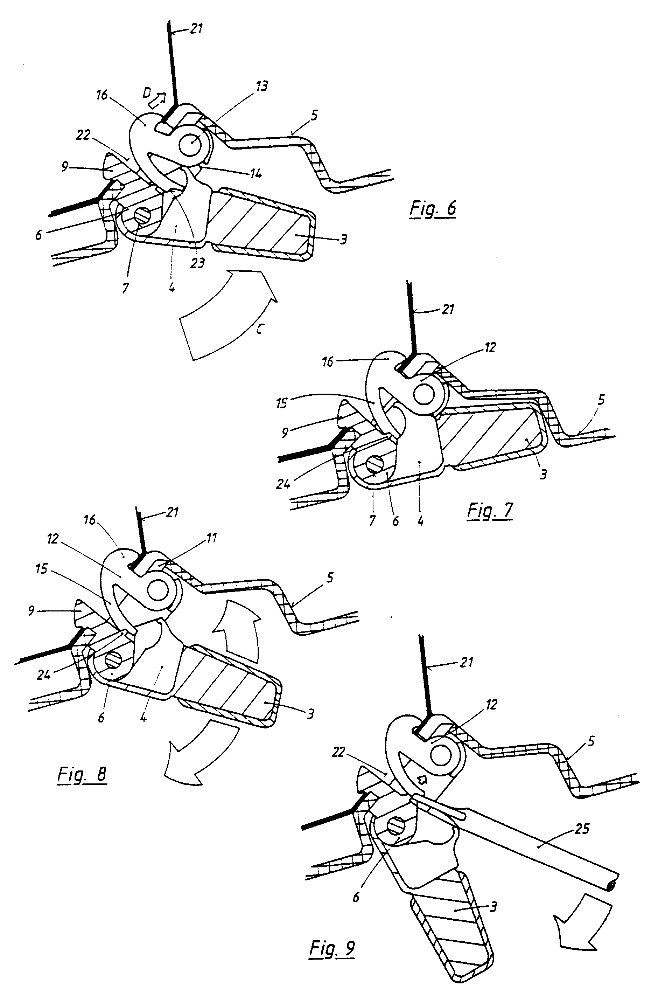

Fig. 4 zeigt, wie die aus einem Anbauteil und Formkörper bestehende Einheit an eine Anschlußwand 21, bei der es sich um einen Dachholm der Fahrzeugkarosserie handeln kann, heranzuführen ist. Dabei wird, folgend der Pfeilrichtung B, die Rastnase 9 über den unteren Rand einer Öffnung 22 der Anschlußwand 21 gehängt. Fig. 5 zeigt, wie hiernach die Aufnahmeschale 5 an der Anschlußwand 21 anliegt. Fig. 6 zeigt den zur endgültigen Festlegung noch erforderlichen Schritt, der darin besteht, den Griffkörper 1 aus der Gebrauchslage in die Nichtgebrauchslage zu klappen. Bei der Klappbewegung in Pfeilrichtung C wird der Rasthebel 12 entsprechend Pfeilrichtung D verschwenkt, und zwar durch die auf das freie Ende des Druckarms 15 wirkende Wandung 17 im Aufnahmegehäuse 4. Durch die Schwenkbewegung hintergreift der Rastarm 16 unter Verspannung den Rand der Öffnung 22, der der Rastnase 9 abgewandt ist. Die Verriegelung wird durch einen am freien Ende des Druckarms 15 ausgebildeten Rastnocken 23 gesichert, der in der Rastlage von einem Anschlag 24 des Lagerbocks 6 abgestützt ist. Bei der Schwenkbewegung des Rasthebels 12 überschreitet der Rastnocken 23 die Totpunktlinie zwischen dem Gelenkstift 7 und der Drehachse 13. In Fig. 7 ist die abgeschlossene Befestigungssituation gezeigt, während Fig. 8 verdeutlichen soll, wie der Griffkörper 1 in Benutzung genommen werden kann.

Eine Demontagemöglichkeit ist in Fig. 9 gezeigt, wobei mit einem Schraubendreher 25 der Druckarm 15 vom Anschlag 24 abgehoben wird.

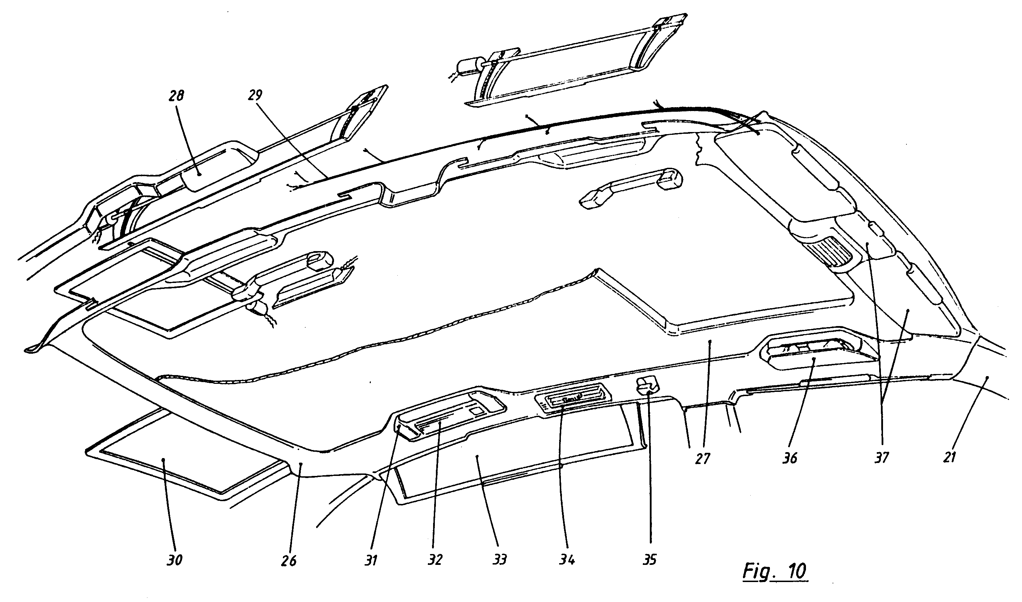

Fig. 10 zeigt ein Ausführungsbeispiel mit mehreren an einem Formkörper, der hier als Zier- und Stützrahmen 26 ausgebildet ist, angeordneten Anbauteilen. Der Zier- und Stützrahmen besteht aus einem umlaufenden Rahmen 26, der auch zwecks Überbrückung von Toleranzen aus Einzelelementen zusammengesetzt sein kann. Der Rahmen 26 ist mit einem Dachhimmel 27 und weiteren Anbauelementen ausgerüstet. Im Ausführungsbeispiel sind als Anbauelemente, Luftkanäle 28, Verkabelungen 29, Hecksonnenblenden 30, Haltegriffe 31, Leuchten 32, seitliche Sonnenblenden 33, Lüfterdüsen 34, Garderobehaken 35, Brillendepots 36 und Frontsonnenblenden 37 vorgesehen. Es versteht sich, daß nicht in jedem Fall die Anordnung aller vorgenannter Anbauelemente erforderlich ist. Wichtig ist aber, daß der Zier- und Stützrahmen 26 zumindest durch die Befestigungsausbildungen der Haltegriffe 31, die weiter oben ausführlich beschrieben wurden, an den Anschlußwänden 21 festlegbar ist.

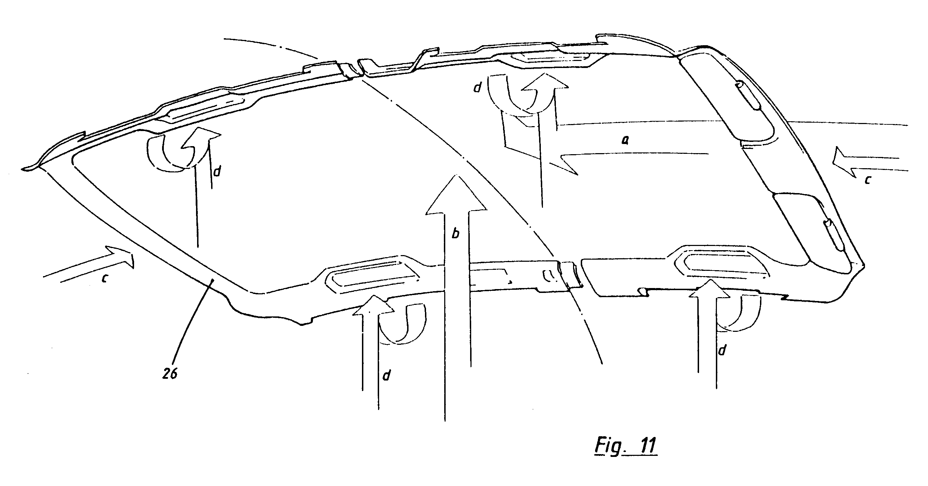

Der Montageablauf der Formkörperbaueinheit nach Fig. 10 kann unter Verwendung eines Handlingsgeräts wie in Fig. 11 schematisch gezeigt, in den Schritten a) bis d) erfolgen. Dabei bedeuten:
a) Einfahren der Formkörperbaueinheit durch die Windschutzscheibe,
b) Anheben der Formkörperbaueinheit bis zur Anlage am Dach/Dachrahmen,
c) Einrasten der Rastnasen durch Verschieben des Rahmens 26,
d) Andrücken der Griffkörper und Sperren der Rasthebel.

## Patentansprüche

1. Anbauteil, wie Haltegriff (31), Sonnenblende (33, 37) od. dgl. für den Innenraum von Fahrzeugen, mit zumindest einem Aufnahmegehäuse (4) zum Übergreifen eines an einer Anschlußwand (21) zu befestigenden Lagerbocks (6), an dem das Anbauteil zum Überführen aus einer Nichtgebrauchslage in eine Gebrauchslage oder umgekehrt klappbar angelenkt ist, wozu ein Bohrungen im Aufnahmegehäuse (4) und Lagerbock (6) durchsetzender Gelenkstift (7) vorgesehen ist, dadurch gekennzeichnet, daß der Lagerbock (6) mit einer, eine Öffnung (22) in der Anschlußwand (21) durchsetzenden und den Öffnungsrand hintergreifenden Rastnase (9) ausgebildet ist, daß der Lagerbock (6) einen daran angelenkten Rasthebel (12) mit einer parallel zum Gelenkstift (7) ausgerichteten Drehachse (13) trägt, daß der Rasthebel (12) nach Art eines Stockankers ausgebildet und mit dem freien Stockende am Lagerbock (6) angelenkt ist, während am anderen Stockende die gekrümmten Arme (15, 16) sitzen, von denen der erste (15) vom Aufnahmegehäuse (4) beaufschlagbar ist, um den zweiten (16) durch eine Klappbewegung des Anbauteils in eine den Rand der Öffnung (22) in der Anschlußwand (21), an der der Rastnase (9) abgewandten Seite hintergreifende Rastlage zu schwenken und daß der erste Arm (15) mit einem Rastnocken (23) ausgebildet ist, der in der Rastlage des Arms (15) von einem Anschlag (24) des Lagerbocks (6) abgestützt ist.

2. Anbauteil nach Anspruch 1, dadurch gekennzeichnet, daß dasselbe an einem Formkörper vormontiert und zusammen mit dem Formkörper an der Anschlußwand (21) befestigbar ist.

3. Anbauteil nach Anspruch 1 oder 2, dadurch gekennzeichnet, daß der Formkörper als Aufnahmeschale (5) zur versenkbaren Anordnung des Anbauteils in der Nichtgebrauchslage desselben ausgebildet ist.

4. Anbauteil nach Anspruch 1 oder 2, dadurch gekennzeichnet, daß der Formkörper als Zier- und/oder Stützrahmen (26) ausgebildet und am Randbereich des Fahrzeugdachs anordbar ist.

5. Anbauteil nach Anspruch 4, dadurch gekennzeichnet, daß der Zier- und/oder Stützrahmen (26) aus mindestens zwei Teilelementen besteht.

6. Anbauteil nach wenigstens einem der Ansprüche 1 bis 5, dadurch gekennzeichnet, daß der Lagerbock (6) einstückiger Bestandteil des Formkörpers ist.

7. Anbauteil nach wenigstens einem der Ansprüche 1 bis 5, dadurch gekennzeichnet, daß der Lagerbock (6) als separates, an das Anbauteil zu montierendes Losteil ausgebildet ist und einen der Rastrase (9) abgewandt ausgerichteten Stützzapfen (11) zum Eingreifen in eine Ausnehmung (19) des Formkörpers aufweist.

8. Anbauteil nach wenigstens einem der Ansprüche 1 bis 7, dadurch gekennzeichnet, daß dasselbe in mehrfacher Anordnung an einem Formkörper, der als Zier- und Stützrahmen (26) ausgebildet ist, vormentiert ist, wobei der Zier- und Stützrahmen (26) mit einem Dachhimmel (27) und weiteren Anbauelementen wie Luftkanälen (28), Verkabelungen (29), Hecksonnenblenden (30), Haltegriffen (31), Leuchten (32), seitlichen Sonnenblenden (33), Lüfterdüsen (34), Garderobenhaken (35), Brillendepots (36), Frontsonnenblenden (37) und dgl. ausgerüstet ist und wobei der Formkörper zumindest durch die Befestigungsausbildungen der Haltegriffe (31) an den Anschlußwänden (21) festlegbar ist.

## Claims

1. Accessory, such as a grab handle (31), a sun visor (33, 37) or the like, for the passenger compartment of vehicles, with at least one receiving housing (4) for engaging over a bearing support (6), which is to be attached to a connecting wall (21) and to which the accessory, for transfer from a not-in-use position to an in-use position or vice versa, is coupled foldably, an articulated pin (7), which passes through holes in the receiving housing (4) and bearing support (6), being provided for this purpose, characterized in that the bearing support (6) is constructed with a latching lug (9) which passes through an opening (22) in the connecting wall (21) and engages behind the opening edge, in that the bearing support (6) bears a latching lever (12) which is coupled thereto and has a spindle (13) which is aligned parallel to the articulated pin (7), in that the latching lever (12) is constructed in the manner of a stock anchor and is coupled with the free stock end to the bearing support (6), whereas at the other stock end there are fitted the curved arms (15, 16), of which the first (15) can be acted upon by the receiving housing (4) in order to pivot the second one (16), by virtue of a folding movement of the accessory, into a latching position engaging behind the edge of the opening (22) in the connecting wall (21), on that side which is remote from the latching lug (9), and in that the first arm (15) is constructed with a latching projection (23) which, in the latching position of the arm (15), is supported by a stop (24) of the bearing support (6).

2. Accessory according to Claim 1, characterized in that it is preassembled on a moulding and together with the moulding can be attached to the connecting wall (21).

3. Accessory according to Claim 1 or 2, characterized in that the moulding is constructed as a receiving shell (5) for the foldaway arrangement of the accessory in the not-in-use position thereof.

4. Accessory according to Claim 1 or 2, characterized in that the moulding is constructed as a decorative and/or supporting frame (26) and can be arranged on the edge region of the vehicle roof.

5. Accessory according to Claim 4, characterized in that the decorative and/or supporting frame (26) comprises at least two subelements.

6. Accessory according to at least one of Claims 1 to 5, characterized in that the bearing support (6) is an integral component of the moulding.

7. Accessory according to at least one of Claims 1 to 5, characterized in that the bearing support (6) is constructed as a separate loose part to be fitted on the accessory, and has a supporting peg (11) aligned remote from the latching lug (9) and intended for engagement in a recess (19) of the moulding.

8. Accessory according to at least one of Claims 1 to 7, characterized in that it is preassembled in a multiple arrangement on a moulding which is constructed as a decorative and supporting frame (26), the decorative and supporting frame (26) being equipped with a roof lining (27) and other accessory elements such as air ducts (28), cabling (29), rear sun visors (30), grab handles (31), lights (32), side sun visors (33), ventilation vents (34), clothes hooks (35), spectacles holders (36), front sun visors (37) and the like, and it being possible to secure the moulding on the connecting walls (21) at least by means of the constructions for attachment of the grab handles (31).

## Revendications

1. Accessoire, tel que poignée (31), pare-soleil (33, 37) ou similaire pour l'habitacle de véhicules, comportant au moins un boîtier de logement (4) destiné à passer sur un support d'appui (6), à fixer sur une paroi de raccordement (21) sur lequel l'accessoire s'articule de manière à pouvoir être rabattu afin de passer d'une position de non-utilisation dans une position d'utilisation ou inversement, une tige d'articulation (7) qui traverse des trous pratiqués dans le boîtier (4) et le support d'appui (6), étant prévue à cet effet, caractérisé en ce que le support d'appui (6) comporte un ergot d'arrêt (9) traversant une ouverture (22) pratiquée dans la paroi de raccordement (21) et passant derrière le bord d'ouverture, en ce que le support d'appui (6) porte un levier d'arrêt (12), articulé sur celui-ci, avec un axe de rotation (13) orienté parallèlement à la tige d'articulation (7), en ce que le levier d'arrêt (12) est réalisé à la manière d'une ancre à jas et s'articule sur le support d'appui (6) par l'extrémité libre de la barre, tandis qu'à l'autre extrémité de la barre se trouvent les bras courbés (15, 16), dont le premier bras (15) peut être sollicité par le boîtier de logement (4), pour faire pivoter le second bras (16), par un mouvement de rabat de l'accessoire dans une position d'arrêt passant derrière le bord de l'ouverture (22) pratiquée dans la paroi de raccordement (21), sur le côté opposé à l'ergot d'arrêt (9), et en ce que le premier bras (15) comporte une came d'arrêt (23), qui en position d'arrêt du bras (15), est soutenue par une butée (24) du support d'appui (6).

2. Accessoire selon la revendication 1, caractérisé en ce que celui-ci est prémonté sur un corps façonné et peut être fixé avec le corps façonné sur la paroi de raccordement (21).

3. Accessoire selon la revendication 1 ou 2, caractérisé en ce que le corps façonné est réalisé sous la forme d'une coque de logement (5) en vue de la disposition encastrée de l'accessoire dans sa position de non-utilisation.

4. Accessoire selon la revendication 1 ou 2, caractérisé en ce que le corps façonné est réalisé sous la forme d'un cadre enjoliveur et/ou d'appui (26) et peut être placé sous la zone de bordure du toit du véhicule.

5. Accessoire selon la revendication 4, caractérisé en ce que le cadre enjoliveur et/ou cadre d'appui (26) est constitué d'au moins deux éléments partiels.

6. Accessoire selon l'une au moins des revendications 1 à 5, caractérisé en ce que le support d'appui (6) est un constituant d'une seule pièce du corps façonné.

7. Accessoire selon l'une au moins des revendications 1 à 5, caractérisé en ce que le support d'appui (6) est une pièce libre séparée, à monter sur l'accessoire et comporte un tenon d'appui (11), orienté à l'opposé de l'ergot d'arrêt (9), destiné à s'engager dans un évidement (19) du corps façonné.

8. Accessoire selon l'une au moins des revendications 1 à 7, caractérisé en ce que celui-ci est prémonté, dans une disposition multiple, sur un corps façonné, qui est réalisé en tant que cadre enjoliveur et cadre d'appui (26), le cadre enjoliveur et cadre d'appui (26) étant équipé d'un revêtement de plafond (27) et d'autres éléments accessoires tels que canaux d'air (28), câblages (29), pare-soleil arrière (30), poignées (31), lampes (32), pare-soleil latéraux (33), buses d'aération (34), crochets pour cintres (35), rangements à lunettes (36), pare-soleil avant (37) et similaires et le corps façonné pouvant être fixé sur les parois de raccordement (21), au moins par les fixations formées sur les poignées (31).
